# FASCICULE DE BREVET EUROPEEN

(11) **EP 3 778 381 B1**
(45) Date de publication et mention de la délivrance du brevet: **22.09.2021**
(21) Numéro de dépôt: 20188971.4
(22) Date de dépôt: 31.07.2020
(51) Int. Cl.: B64C 7/02, B64D 29/00, B64D 29/06

(54) **PARTIE ANTÉRIEURE DE NACELLE D'UN ENSEMBLE PROPULSIF D'AÉRONEF DONT LA LÈVRE D'ENTRÉE D'AIR EST LIÉE AU PANNEAU EXTÉRIEUR PAR EMBOITEMENT**
FRONTTEIL EINER GONDEL EINER ANTRIEBSGRUPPE EINES LUFTFAHRZEUGS, DESSEN LUFTEINLASSLIPPE MIT EINEM EXTERNEN PANEEL ÜBER EIN VERBUNDSYSTEM VERBUNDEN IST
FORWARD SECTION OF NACELLE OF AN AIRCRAFT PROPULSION ASSEMBLY IN WHICH THE AIR INTAKE LIP IS CONNECTED TO THE EXTERNAL PANEL BY NESTING

(30) Priorité: 13.08.2019 FR 1909179
(43) Date de publication de la demande: 17.02.2021
(73) Titulaire: AIRBUS OPERATIONS (S.A.S.), 31060 Toulouse (FR)
(72) Inventeur: PORTE, Alain, 31060 TOULOUSE Cedex 9 (FR); VINCHES, Frédéric, 31060 TOULOUSE Cedex 9 (FR); LALANE, Jacques, 31060 TOULOUSE Cedex 9 (FR); DOBIGEON, Franck, 31060 TOULOUSE Cedex 9 (FR)
(74) Mandataire: Gicquel, Olivier Yves Gérard

(56) Documents cités:
- EP-A1- 0 921 293
- FR-A1- 2 922 522
- FR-A1- 3 004 165

## Description

La présente invention concerne les ensembles propulsifs d'aéronef et plus particulièrement les nacelles des ensembles propulsifs d'aéronef.

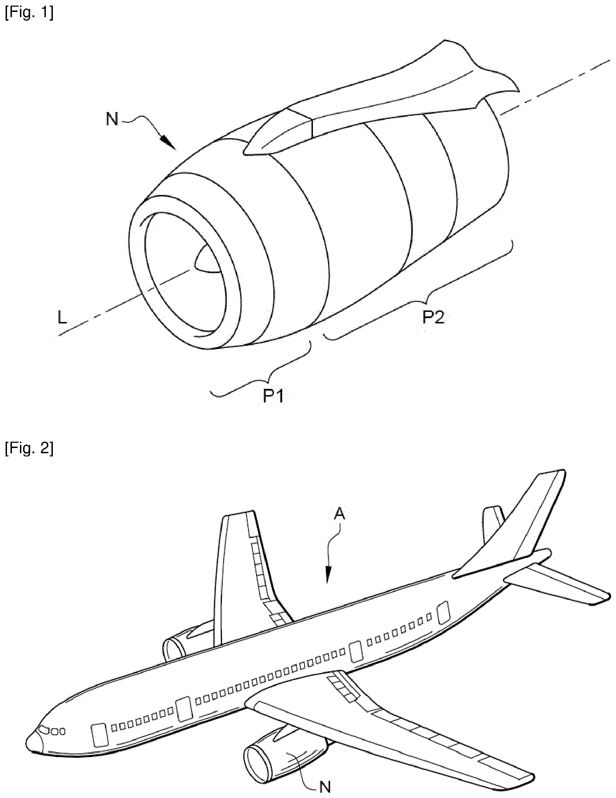

Un ensemble propulsif est un dispositif permettant de générer une poussée, qui constitue la force motrice de l'aéronef équipé de l'ensemble propulsif. Un ensemble propulsif d'aéronef est représenté à titre d'exemple à la figure 1.

Un exemple d'implantation classique d'une nacelle N d'un ensemble propulsif sur un aéronef A est représenté à la figure 2.

La nacelle comporte classiquement une partie antérieure P1 formant entrée d'air. La partie antérieure P1 a pour rôle de capter l'air de façon à assurer un écoulement régulier vers la soufflante. La nacelle comporte par ailleurs une partie principale P2, constituant le reste de ladite nacelle.

L'ensemble propulsif s'étend généralement autour d'un axe appelé par la suite axe longitudinal L. Du fait de la forme sensiblement cylindrique qu'a généralement la nacelle autour de l'axe longitudinal L, toute droite sécante de l'axe L perpendiculairement à ce dernier est dite radiale.

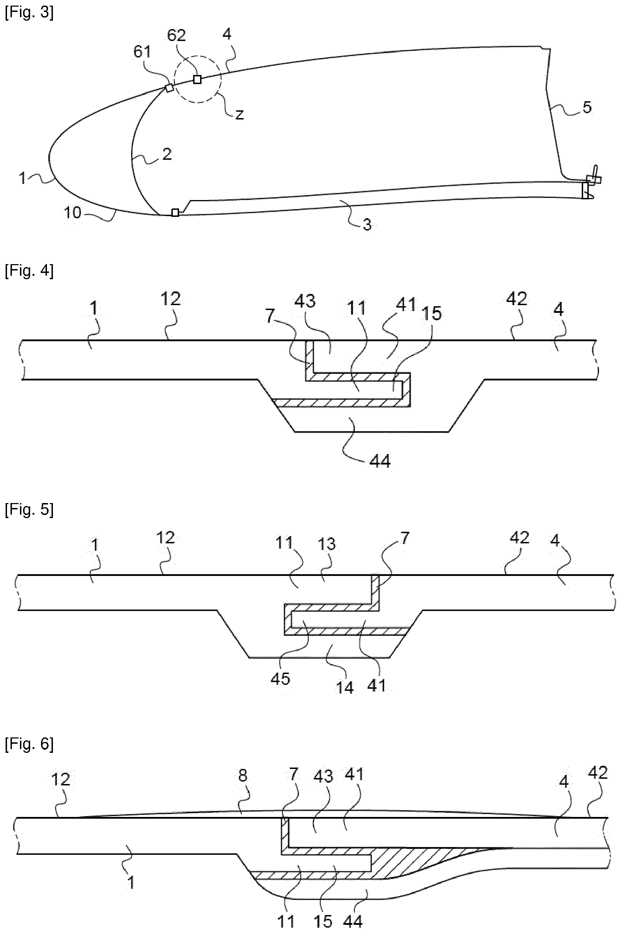

Une structure classique de partie antérieure P1 de nacelle d'ensemble propulsif d'aéronef, telle que connue dans l'état de la technique, est décrite en référence à la figure 3.

La partie antérieure P1 de la nacelle comprend une lèvre d'entrée d'air 1, pouvant être annulaire ou sensiblement annulaire et qui est disposée à son extrémité avant.

Dans l'ensemble du présent document, les notions d'« avant » et d'« arrière », d'« antérieur » et de « postérieur » ainsi que d'« amont » et d'« aval » se comprennent selon la direction du flux d'air dans l'ensemble propulsif. Ainsi, l'air entre par l'avant de l'ensemble propulsif, c'est-à-dire par la partie antérieure P1 de la nacelle et ressort (après qu'une partie de l'air a servi en tant que comburant) par l'arrière de l'ensemble propulsif, c'est-à-dire par l'extrémité arrière de la partie principale P2.

En outre, dans l'ensemble du présent document, un élément « extérieur » désigne un élément radialement éloigné de l'axe longitudinal L, formant typiquement la limite du volume hors tout de la nacelle, tandis qu'un élément « intérieur » désigne un élément proche de l'axe longitudinal L. Par exemple, les flux primaire et secondaire d'un ensemble propulsif d'aéronef s'écoulent dans le conduit intérieur formé par la nacelle de l'ensemble propulsif.

La notion d'interne (à l'inverse de la notion d'externe) à la nacelle désigne la zone située dans l'épaisseur du profil aérodynamique formant ladite nacelle.

Selon la structure classique d'une partie antérieure P1 de l'ensemble propulsif, un cadre avant 2 est disposé à l'arrière de la lèvre d'entrée d'air 1. Une structure intérieure 3 prolonge vers l'arrière une partie intérieure 10 de la lèvre d'entrée d'air 1. En particulier, la surface intérieure de la structure intérieure 3 prolonge vers l'arrière de manière affleurante la surface intérieure de la partie intérieure 10 de la lèvre. La structure intérieure 3 peut correspondre à un panneau insonorisant, ou toute autre forme de paroi définissant un conduit canalisant l'air en direction de la motorisation située dans la partie principale.

Un panneau extérieur 4 prolonge vers l'arrière une partie extérieure 12 de la lèvre d'entrée d'air 1. En particulier, la surface extérieure du panneau extérieur 4 prolonge vers l'arrière de manière affleurante la surface externe de la partie extérieure 12 de la lèvre d'entrée d'air 1.

Un cadre de rigidification 5 également appelé cadre arrière définit la limite entre la partie antérieure P1 et la partie principale P2 de la nacelle.

Le document EP 0 921 293 A1 concerne le dégivrage des capots d'entrée d'air de moteurs à réaction d'aéronefs. Le document FR 3 004 165 A1 se rapporte à une nacelle de moteur d'aéronef comprenant une section de bord d'attaque comprenant au moins un dispositif de traitement contre le givre.

La présente invention porte en particulier sur la liaison entre la lèvre d'entrée d'air et le panneau extérieur 4. Cette liaison est réalisée sur des lignes périphériques de fixation, que l'on peut désigner par l'expression « coutures orbitales », par rivetage d'un bord arrière de la lèvre d'entrée d'air 1 sur le panneau extérieur 4.

Dans l'exemple représenté à la figure 3, deux séries de rivets sont mises en œuvre. Des rivets 61 formant une première couture orbitale sont employés pour la fixation de la périphérie du cadre avant 2 sur la lèvre d'entrée d'air 1. Des rivets 62 formant une deuxième couture orbitale sont employés pour la liaison entre la lèvre d'entrée d'air 1 et le panneau extérieur 4.

Dans certains modes de réalisation, il est néanmoins connu de former une liaison commune (une seule couture orbitale) entre la lèvre d'entrée d'air 1, le cadre avant 2, et le panneau extérieur 4.

L'invention développée ci-après s'intéresse à la liaison entre la lèvre d'entrée d'air 1 et le panneau extérieur 4, mais n'exclut pas que cette liaison forme également la liaison entre la lèvre d'entrée d'air 1 et le cadre avant 2.

Les rivets 62 qui sont employés dans la liaison entre la lèvre d'entrée d'air 1 et le panneau extérieur 4 forment des irrégularités sur la surface externe de la nacelle, susceptibles de perturber l'écoulement de l'air. En particulier, le caractère laminaire de l'écoulement sur la surface externe de la nacelle peut être perturbé localement par les rivets 62, qui par nature forment de légers creux et/ou bosses sur la surface aérodynamique. Plus généralement, toute discontinuité radiale et/ou axiale, à l'interface de deux panneaux ou ensembles (en l'occurrence entre la lèvre d'entrée d'air 1 et le panneau extérieur 4), est susceptible de perturber le bon glissement des couches d'air sur une surface aérodynamique.

Toute perturbation du caractère laminaire du flux d'air peut générer une trainée supplémentaire, qui réduit l'efficacité énergétique de l'aéronef considéré. Dans une partie antérieure d'une nacelle d'un groupe propulseur d'aéronef, également appelée entrée d'air, la liaison entre la lèvre d'entrée d'air et le panneau extérieur constitue la première rupture physique dans les lignes aérodynamiques de la nacelle et la principale source de trainée parasite.

L'invention vise à proposer une configuration de liaison entre la lèvre d'entrée d'air et le panneau extérieur d'une nacelle de groupe propulsif d'aéronef améliorant le caractère laminaire des flux d'air s'écoulant à la surface de ladite nacelle, en particulier à la surface de sa partie antérieure.

Ainsi, l'invention porte sur une partie antérieure de nacelle d'un ensemble propulsif d'aéronef, ladite partie antérieure ayant une extrémité avant permettant l'entrée d'air et une extrémité arrière destinée à être liée au reste de la nacelle. La partie antérieure comprend :
- une lèvre d'entrée d'air disposée à ladite extrémité avant,
- un panneau extérieur dont une face extérieure prolonge une partie extérieure de la lèvre d'entrée d'air, un bord avant du panneau extérieur étant lié à un bord arrière de la lèvre d'entrée d'air. Le bord avant du panneau extérieur et le bord arrière de la lèvre d'entrée d'air sont conformés pour se superposer radialement et s'emboîter en assurant une continuité de surface entre la surface extérieure de la partie extérieure de la lèvre d'entrée d'air et la face extérieure du panneau extérieur. Le bord avant du panneau extérieur est lié au bord arrière de la lèvre d'entrée d'air sans élément rigide rapporté traversant lesdits bord avant du panneau extérieur et bord arrière de la lèvre d'entrée d'air.

L'absence de liaison traversante évite la création de bosses, de creux, et de toute autre irrégularité géométrique ou discontinuité à la surface de la partie antérieure de nacelle, au niveau de la liaison dite orbitale entre la lèvre d'entrée d'air et le panneau extérieur.

L'écoulement de l'air sur la surface externe de la partie antérieure de la nacelle n'est ainsi pas perturbé par des déformations ou des discontinuités locales, ce qui permet un écoulement d'air parfaitement laminaire.

Le bord arrière de la lèvre d'entrée d'air peut présenter une section affinée, diminuant progressivement jusqu'à son extrémité.

Le bord avant du panneau extérieur peut être lié au bord arrière de la lèvre d'entrée d'air à l'aide d'une colle.

Le bord avant du panneau extérieur peut être lié au bord arrière de la lèvre d'entrée d'air par soudure ou brasure.

Le panneau extérieur peut être formé en un matériau composite et le bord avant dudit panneau extérieur peut être formé directement sur le bord arrière de la lèvre d'entrée d'air, ou la lèvre d'entrée d'air peut être formée en un matériau composite et le bord arrière de ladite lèvre d'entrée d'air peut être formé directement sur le bord avant du panneau extérieur.

L'un du bord arrière de la lèvre d'entrée d'air et du bord avant du panneau extérieur peut comporter des ouvertures radiales comblées par l'autre du bord avant du panneau extérieur et du bord arrière de la lèvre d'entrée d'air.

Dans ce cas, celui du bord avant du panneau extérieur et du bord arrière de la lèvre d'entrée d'air qui comble les ouvertures radiales peut être formé en matériau composite, et comporter des plis de matériaux composite qui comblent lesdits orifices et qui sont distincts des autres plis constitutifs dudit panneau extérieur ou de ladite lèvre d'entrée d'air.

L'un du bord arrière de la lèvre d'entrée d'air et du bord avant du panneau extérieur peut comporter des parties en projection radiale emprisonnées dans l'autre du bord avant du panneau extérieur et du bord arrière de la lèvre d'entrée d'air.

Le bord avant du panneau extérieur peut enserrer radialement le bord arrière de la lèvre d'entrée d'air.

Le bord arrière de la lèvre d'entrée d'air peut enserrer radialement le bord avant du panneau extérieur.

La partie antérieure de nacelle peut comporter un revêtement de surface formé à cheval entre la face externe du panneau extérieur et la partie extérieure de la lèvre d'entrée d'air.

L'invention porte également sur une nacelle de groupe propulsif d'aéronef comportant une partie antérieure telle que précédemment décrite.

D'autres particularités et avantages de l'invention apparaîtront encore dans la description ci-après.

Aux dessins annexés, donnés à titre d'exemples non limitatifs :
[Fig. 1] la figure 1 représente selon une vue schématique en trois dimensions un ensemble propulsif d'aéronef ;
[Fig. 2] la figure 2 représente un aéronef selon une vue schématique en trois dimensions,
[Fig. 3] la figure 3 représente selon une vue partielle de principe en coupe une partie antérieure d'une nacelle d'ensemble propulsif d'aéronef conforme à l'art antérieur ;
[Fig. 4] la figure 4 représente, selon une vue de détail en coupe, un exemple de liaison entre une lèvre d'entrée d'air et un panneau extérieur d'une partie avant de nacelle de groupe propulseur d'aéronef conforme à un mode de réalisation de l'invention ;
[Fig. 5] la figure 5 représente, selon une vue de détail en coupe, une variante de la liaison entre une lèvre d'entrée d'air et un panneau extérieur de la partie avant de nacelle de la figure 4 ;
[Fig. 6] la figure 6 représente, selon une vue de détail en coupe, un exemple de liaison entre une lèvre d'entrée d'air et un panneau extérieur d'une partie avant de nacelle de groupe propulseur d'aéronef conforme à un mode de réalisation de l'invention dans lequel le panneau extérieur est en matériau composite ;
[Fig. 7] la figure 7 représente, selon une vue schématique tridimensionnelle partielle, un élément d'interface pouvant être mis en œuvre pour la liaison entre une lèvre d'entrée d'air et un panneau extérieur d'une partie avant de nacelle de groupe propulseur d'aéronef selon un mode de réalisation de l'invention ;
[Fig. 8] la figure 8 représente, selon une vue similaire à celle de la figure 7, une liaison entre une lèvre d'entrée d'air et un panneau extérieur d'une partie avant de nacelle de groupe propulseur d'aéronef réalisée avec l'élément représenté à la figure 7 ;
[Fig. 9] la figure 9 représente, selon une vue de détail en coupe, un autre exemple de liaison entre une lèvre d'entrée d'air et un panneau extérieur d'une partie avant de nacelle de groupe propulseur d'aéronef conforme à un mode de réalisation de l'invention dans lequel le panneau extérieur est en matériau composite ;
[Fig. 10] la figure 10 représente, selon une vue schématique tridimensionnelle partielle, un autre élément d'interface pouvant être mis en œuvre à la liaison entre une lèvre d'entrée d'air et un panneau extérieur d'une partie avant de nacelle de groupe propulseur d'aéronef selon un mode de réalisation de l'invention ;
[Fig. 11] la figure 11 représente selon une vue de détail en coupe, un autre exemple de liaison entre une lèvre d'entrée d'air et un panneau extérieur d'une partie avant de nacelle de groupe propulseur d'aéronef conforme à un mode de réalisation de l'invention dans lequel le panneau extérieur est en matériau composite ;
[Fig. 12] la figure 12 représente, selon une vue de détail en coupe, un autre exemple de liaison entre une lèvre d'entrée d'air et un panneau extérieur d'une partie avant de nacelle de groupe propulseur d'aéronef conforme à un mode de réalisation de l'invention dans lequel le panneau extérieur est en matériau composite ;
[Fig. 13] la figure 13 représente selon une vue de détail en coupe, un autre exemple de liaison entre une lèvre d'entrée d'air et un panneau extérieur d'une partie avant de nacelle de groupe propulseur d'aéronef conforme à un mode de réalisation de l'invention dans lequel le panneau extérieur est en matériau composite ;
[Fig. 14] la figure 14 représente selon une vue de détail en coupe, un autre exemple de liaison entre une lèvre d'entrée d'air et un panneau extérieur d'une partie avant de nacelle de groupe propulseur d'aéronef conforme à un mode de réalisation de l'invention dans lequel le panneau extérieur est en matériau composite.
[Fig. 15] la figure 15 représente, selon une vue partielle de principe en coupe, une partie antérieure d'une nacelle formée selon un premier aspect de l'invention ;
[Fig. 16] la figure 16 représente, selon une vue partielle de principe en coupe, une partie antérieure d'une nacelle formée selon un premier aspect de l'invention.

Les figures 1 à 3, présentant des généralités sur les ensembles propulsifs d'aéronef et une configuration de partie antérieure de nacelle conforme à l'état de la technique ont été décrites ci-avant, en préambule du présent document. Les mêmes références que celles employées dans la description des figures 1 à 3 sont utilisées pour désigner les mêmes éléments dans la suite de la présente description.

La figure 4 représente un premier exemple de liaison entre la lèvre d'entrée d'air 1 et le panneau extérieur 4 pouvant être mise en œuvre dans une partie antérieure de nacelle conforme à l'invention. La figure 4 correspond ainsi à une représentation partielle d'une partie antérieure de nacelle, à savoir de la zone Z indiquée à la figure 3 par un trait en pointillés. Ainsi, à la figure 4, seules les portions de la lèvre d'entrée d'air 1 et du panneau extérieur 4 situées de part et d'autre de leur liaison sont représentées.

Le cadre avant 2 n'est pas représenté à la figure 4. Il peut être lié à la lèvre d'entrée d'air 1, au panneau extérieur 4, ou au niveau de la liaison entre la lèvre d'entrée d'air 1 et le panneau extérieur 4, de préférence par des moyens de liaison ne traversant pas l'élément auquel il est lié. De tels moyens de liaison peuvent par exemple être une colle, une brasure, ou une soudure non-traversante.

La liaison entre la lèvre d'entrée d'air 1 et le panneau extérieur 4 consiste plus particulièrement à lier un bord arrière 11 de la lèvre d'entrée d'air à un bord avant 41 du panneau extérieur 4. L'objectif est d'assurer une parfaite continuité de surface entre une surface externe de la partie extérieure 12 de la lèvre d'entrée d'air 1 et une face externe 42 du panneau extérieur 4.

Pour cela, le bord arrière 11 et le bord avant 41 présentent une complémentarité de forme leur permettant de s'emboîter l'un par rapport à l'autre. Dans l'exemple ici représenté, le bord avant 41 du panneau extérieur 4 comporte une partie épaissie dans laquelle est ménagée une rainure périphérique dans laquelle est reçu, en tout ou partie, le bord arrière 11 de la lèvre d'entrée d'air 1. Vu en coupe, comme à la figure 4, le bord avant du panneau extérieur 4 présente donc une première branche 43 et une deuxième branche 44 (situées à l'intérieur du profil aérodynamique de la nacelle). Ainsi, le bord arrière 11 de la lèvre d'entrée d'air 1 est enserré par le bord avant 41 du panneau extérieur 4. En particulier le bord arrière 11, et plus particulièrement un décrochement radial 15 dudit bord arrière 11, est reçu entre la première branche 43 et la deuxième branche 44.

Cette configuration permet un bon maintien en position de la lèvre d'entrée d'air 1 vis-à-vis du panneau extérieur 4, et en particulier une parfaite mise en correspondance de la surface externe de la partie extérieure 12 et de la face externe 42 du panneau extérieur 4.

Afin de réaliser une liaison rigide, le bord arrière 11 de la lèvre d'entrée d'air 1 est fixé au bord avant 41 du panneau extérieur 4 par un moyen de fixation non traversant, c'est-à-dire sans élément rigide rapporté tel qu'un rivet traversant lesdits bord 41 et bord avant 11.

Lorsque la lèvre d'entrée d'air 1 et le panneau extérieur 4 sont métalliques, le moyen de fixation utilisé peut être une soudure ou une brasure. Notamment une brasure peut être réalisée entre le bord avant 41 du panneau extérieur 4 et le bord arrière 11 de la lèvre d'entrée d'air qui sont emboîtés l'un par rapport à l'autre.

Une soudure non traversante peut être réalisée. Par exemple, une soudure non traversante à proprement parler peut être réalisée, ou une soudure traversante entre la deuxième branche 44 et le bord arrière 11 dans sa partie enserrée par le bord avant du panneau extérieur 4, de sorte que la soudure n'est pas visible sur la face externe 42.

En alternative ou en complément, le moyen de fixation employé peut consister en une colle ou plus généralement un moyen adhésif.

Une colle 7 ou un adhésif peut notamment être employé lorsque le panneau extérieur 4 ou la lèvre d'entrée d'air 1 (ou les deux) est en matériau composite ou hybride composite/métallique. Bien évidemment, dans tous les modes de réalisation mettant en œuvre un élément en matériau composite ou hybride, l'adhésion de cet élément sur un autre élément peut être obtenue sans colle rapportée, par polymérisation de l'élément composite ou hybride sur cet autre élément. Les matériaux composites envisagés comportent notamment les matériaux composites à matrice organique et renforts par fibre de carbone et/ou d'aramide, ou autre fibre adaptée. L'adhésif doit avantageusement résister aux hautes températures auxquelles sont soumis les composants de l'ensemble propulsif. L'adhésif peut donc être choisi parmi des polyépoxydes ou époxy résistant à des températures allant jusqu'à 150°, des polymères polyamide résistant à des températures supérieures à 200°, des polymères BMI dont la température d'application est comprise entre celles des résines époxy et celles des polyamides, des polymères phtalo-nitrile qui gardent leurs caractéristiques mécaniques pour des températures comprises entre -54° C et 343°C ou encore des résines cyanate ester ayant une bonne compatibilité avec les autres résines.

La conjonction de l'emboîtement et du moyen de liaison non traversant assure la liaison entre la lèvre d'entrée d'air 1 et le panneau extérieur 4, sans déformation de la face externe 42 du panneau extérieur 4 ou de la surface externe de la partie extérieure 12 de la lèvre d'entrée d'air 1. En outre, le moyen de liaison (colle 7, brasure, etc.) peut être employé pour combler l'éventuel interstice résiduel entre le bord arrière 11 de la lèvre d'entrée d'air et le bord avant 41 du panneau extérieur 4.

La continuité entre la surface externe de la partie extérieure 12 et la face externe 42 est ainsi parfaite, sur l'ensemble de la périphérie de la partie antérieure de la nacelle, et aucun élément traversant ne déforme localement la surface aérodynamique externe de ladite partie avant de nacelle.

La figure 5 représente une variante de la liaison représentée à la figure 4. Selon cette variante, c'est le bord arrière 11 de la lèvre d'entrée d'air 1 qui comporte une partie épaissie dans laquelle est ménagée une rainure périphérique dans laquelle est reçu, en tout ou partie, le bord avant 41 du panneau extérieur 4, et qui présente donc, vu en coupe une première branche 13 et une deuxième branche 14, entre lesquelles est reçu un décrochage radial 45 du panneau extérieur.

La description de la figure 4 s'applique ainsi, mutatis mutandis, à la figure 5.

La figure 6 illustre une liaison entre une lèvre d'entrée d'air 1 et un panneau extérieur 4, fondée sur le même principe général que la liaison illustrée à la figure 4, dans le cas particulier où le panneau extérieur 4 est réalisé en matériau composite. En particulier, dans la liaison qui est constituée, le bord avant 41 du panneau extérieur est configuré de sorte qu'il enserre le bord arrière 11 (au niveau d'un décrochage radial 15) de la lèvre d'entrée d'air 1.

Dans l'exemple ici représenté, une colle 7 est mise en œuvre pour lier le panneau extérieur 4 à la lèvre d'entrée d'air 1. La liaison peut, alternativement, mettre en œuvre un adhésif contenu par pré-imprégnation autour des fibres d'un matériau composite. Comparativement au mode de réalisation de la figure 4, le mode de réalisation représenté à la figure 6 est remarquable en ce que, le panneau extérieur 4 étant en matériau composite (ou hybride), la deuxième branche 44 est formée in situ, lors de la liaison de la lèvre d'entrée d'air 1 au panneau extérieur 4. Ainsi, la première branche 41 correspond à l'extrémité du panneau extérieur 4, qui est mis en position sur (c'est-à-dire autour de, s'agissant de pièce essentiellement de révolution) le décrochage radial 15 du bord arrière 11 de la lèvre d'entrée d'air. La deuxième branche 44 est rapportée et liée au reste du panneau extérieur 4 par exemple par un procédé de co-polymérisation ou co-durcissage, couramment désigné par l'expression anglophone « co-curing ».

La deuxième branche 44 est liée au bord arrière de la lèvre d'entrée d'air par collage, ou par polymérisation après traitement préalable du bord arrière, si ce dernier est métallique, ou par co-polymérisation s'il est en matériau composite ou hybride. Un tel traitement peut être appliqué dans tous les modes de réalisation de l'invention dans lesquels une adhésion est souhaitée entre une pièce métallique et une pièce en matériau composite.

La figure 6 illustre un autre aspect, à savoir qu'un revêtement de surface 8 peut être formé à cheval entre la face externe 42 du panneau extérieur 4 et la surface externe de la partie extérieure 12 de la lèvre d'entrée d'air 1. Ce revêtement, très fin, par exemple de l'ordre de quelques microns d'épaisseur moyenne, permet l'obtention d'une surface parfaitement continue à l'interface entre la lèvre d'entrée d'air et le panneau extérieur 4. Un tel revêtement peut être employé quelles que soit les constitutions respectives (métallique ou composite) de la lèvre d'entrée d'air 1 et du panneau extérieur 4. La composition du revêtement et son mode d'application sont simplement adaptés à ces constitutions. Ainsi, bien qu'illustré uniquement à la figure 6, un tel revêtement peut être employé dans tout mode de réalisation de l'invention.

Toute autre configuration d'emboîtement au sens large du terme, c'est-à-dire de correspondance de forme permettant un empilement radial entre le bord arrière 11 de la lèvre d'entrée d'air 1 et le bord avant du panneau extérieur 4 peut être envisagé sans sortir du cadre de l'invention. Par exemple, au lieu d'un décrochage radial, le bord arrière 11 (ou respectivement le bord avant 41) peut présenter une section amincie sensiblement centrée sur l'épaisseur de la lèvre d'entrée d'air (respectivement du panneau extérieur) pour être enserrée par le bord avant 41 (respectivement par le bord arrière 11).

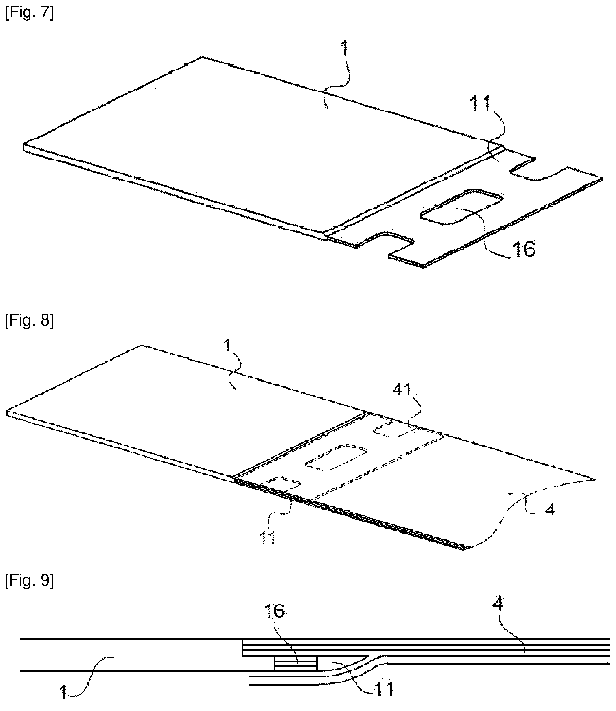

En outre, comme illustré aux figures 7 à 14, certains modes de réalisation de l'invention mettent en outre en œuvre un emboîtement longitudinal de la lèvre d'entrée d'air 1 et du panneau extérieur 4.

La figure 7 illustre ainsi le bord arrière 11 d'une portion, c'est-à-dire d'un arc, de lèvre d'entrée d'air 1. Par simplification, la partie représentée semble plate, mais elle présente généralement en pratique une courbure afin de former une pièce fermée sur elle-même, par exemple sensiblement annulaire. Le bord arrière 11 présente une section amincie, dans laquelle sont réalisées des ouverture radiales 16.

Lors de la liaison entre le panneau extérieur 4 et la lèvre d'entrée d'air 1, qui aboutit à la constitution de l'élément représenté à la figure 8, les ouvertures radiales sont comblées, de sorte que le bord avant 41 se trouve emboîté longitudinalement avec le bord arrière 11. Cette configuration est particulièrement adaptée lorsque le panneau extérieur 4 est formé en matériaux composites (ou hybride), en ce qu'il peut être coulé directement sur le bord arrière de la lèvre d'entrée d'air 1, ce qui entraine un emprisonnement complet du bord arrière 11 dans le bord avant 41 du fait des ouvertures radiales 16. Si un panneau extérieur 4 rigide est assemblé à la lèvre d'entrée d'air, que le panneau extérieur soit métallique, composite déjà durci ou hybride, les ouvertures radiales 16 peuvent être comblées, en tout ou partie, par des éléments du panneau extérieur 4 qui viennent s'y clipser.

La figure 9 illustre une variante du mode de réalisation de la figure 8. Comparativement au mode de réalisation de la figure 8, le mode de réalisation de la figure 9 comporte deux caractéristiques pouvant être appliquées indépendamment l'une de l'autre ou en combinaison. Selon ce mode de réalisation, le bord arrière 11 de la lèvre d'entrée d'air 1 est aminci. L'amincissement de la section du bord arrière permet une liaison plus rigide avec un panneau extérieur 4 en matériau composite, qui est formé, par exemple coulé, directement sur le bord arrière 11 de la lèvre d'entrée d'air de sorte à l'enserrer. Selon une autre caractéristique du mode de réalisation de la figure 9, des plis de matériau composite sont mis en place dans les ouvertures radiales 16, avant qu'elles ne soient recouvertes, tant sur la face externe du bord arrière 11 que sur sa face interne, par des plis de matériau composite constitutifs du panneau extérieur 4.

Entre la mise en place de plis de matériau composite dans les ouvertures radiales 16 et la formation du panneau extérieur, le bord arrière 11 peut, optionnellement, être enduit, sur sa face interne et/ou sa face externe, d'une colle ou d'un adhésif.

Il est notable que, dans ce mode de réalisation, le bord arrière 11 comporte un décrochage radial permettant, une fois le panneau extérieur 4 formé, une parfaite continuité de surface entre la surface externe de la lèvre d'entrée d'air 1 et la surface externe dudit panneau extérieur 4.

Selon un mode de réalisation de l'invention est donc réalisé un procédé de formation d'une partie antérieure de nacelle d'un ensemble propulsif d'aéronef comportant :
- la fourniture d'une lèvre d'entrée d'air comportant un bord arrière 11 aminci comportant des ouvertures radiales 16,
- le remplissage des ouvertures radiales par des plis d'un matériau composite ;
- le recouvrement, d'au moins une face du bord aminci par des plis du matériau composite constitutifs d'un panneau extérieur 4.

Optionnellement, la face du bord aminci recouverte par les plis du matériau composite constitutifs du panneau extérieur 4 peut être enduite d'un adhésif avant ledit recouvrement.

Dans certains modes de réalisation, le recouvrement peut être réalisé sur les deux faces du bord aminci 11, de sorte que ledit bord aminci est enserré par les plis du matériau composite constitutifs du panneau extérieur 4.

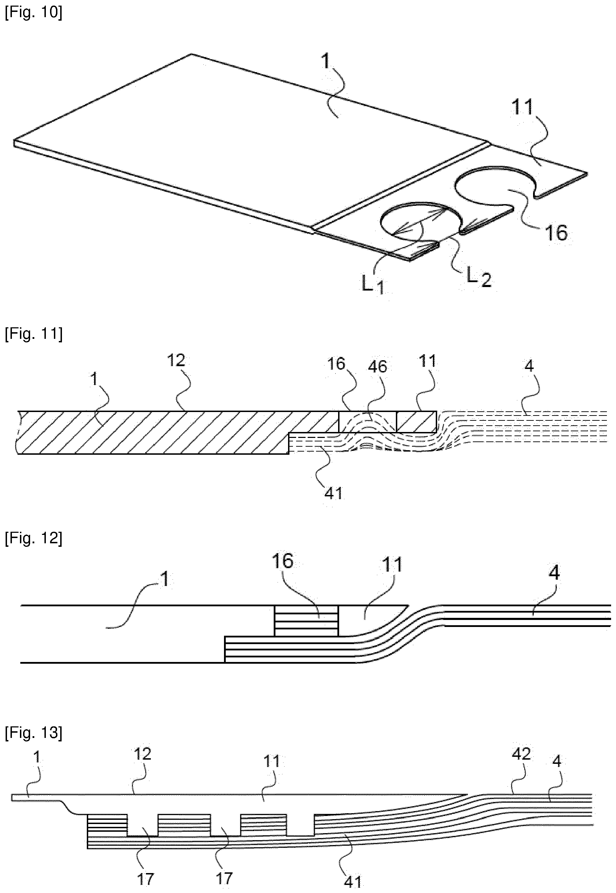

Les ouvertures radiales 16 peuvent prendre la forme de fenêtres, comme dans l'exemple représenté à la figure 7, ou alternativement d'encoches ou « étranglements » comme représenté à la figure 10. Un étranglement correspond à un orifice ouvert à l'extrémité du bord arrière 11, et présentant une largeur d'ouverture médiane L1 supérieure à sa largeur L2 à l'extrémité du bord arrière 11.

Les ouvertures radiales 16, quelle que soit leur forme, peuvent être usinées dans la pièce ou être formées directement dans celle-ci, notamment si elles sont en matériau composite.

La figure 11 représente un exemple de mode de réalisation dans lequel le bord arrière 11 de la lèvre d'entrée d'air 1 présente une zone amincie, d'épaisseur réduite comparativement au reste de la lèvre d'entrée d'air. Dans l'exemple représenté, cette zone amincie prolonge, sans décrochement, la surface externe de la partie extérieure 12 de la lèvre d'entrée d'air. Le panneau extérieur 4 est en matériau composite, et son bord avant est formé, par exemple coulé, directement sur le bord arrière 11 de la lèvre d'entrée d'air. Le bord avant du panneau extérieur 4 vient ainsi compléter l'épaisseur de la zone amincie en s'y superposant, ce qui forme sur la périphérie de la nacelle un emboîtement entre lesdits bord arrière et bord avant une fois le panneau extérieur 4 durci. Afin d'assurer un bon maintien longitudinal des pièces entre elles, le bord arrière 11 de la lèvre d'entrée d'air comporte des ouvertures radiales 16, qui sont comblées par le bord avant 41 du panneau extérieur 4 sur lequel sont formés des éléments radiaux 46 formant clavette lors de son moulage ou coulage sur le bord arrière 11.

Si un panneau extérieur 4 rigide (métallique, composite durci, etc.) est fixé à la lèvre d'entrée d'air 1, il présente des éléments radiaux 46 complémentaires des ouvertures radiales 16 de sorte à s'y clipser. Un collage entre le bord arrière 11 et le bord avant 41 peut compléter la fixation. Bien évidemment, la configuration présentée à la figure 11 peut être inversée, en ce que le panneau extérieur 4 viendrait en superposition à l'extérieur d'une zone amincie du bord arrière de la lèvre d'entrée d'air 1 qui formerait un décrochage dans la partie extérieure 12 de la lèvre d'entrée d'air.

Egalement, la configuration peut être inversée en ce que le bord arrière d'une lèvre d'entrée d'air en matériau composite est formé sur le bord avant d'un panneau extérieur 4, ou clipsé à ce dernier.

La figure 12 illustre une variante du mode de réalisation de la figure 11.

Comparativement au mode de réalisation de la figure 11, le mode de réalisation de la figure 12 comporte deux caractéristiques pouvant être appliquées indépendamment l'une de l'autre ou en combinaison. Selon ce mode de réalisation, le bord arrière 11 de la lèvre d'entrée d'air 1 est aminci. L'amincissement de la section du bord arrière permet une liaison plus rigide avec un panneau extérieur 4 et une meilleure continuité de surface. Le panneau extérieur 4 est formé, par exemple coulé, directement sur le bord arrière 11, et se superpose à sa face interne. Selon une autre caractéristique du mode de réalisation de la figure 12, des plis de matériau composite sont mis en place dans les ouvertures radiales 16, avant d'être recouvertes, sur la face interne du bord arrière 11, par les plis de matériau composite constitutifs du panneau extérieur 4.

Entre la mise en place de plis de matériau composite dans les ouvertures radiales 16 et la formation du panneau extérieur, le bord arrière 11 peut, optionnellement, être enduit, sur sa face interne, d'une colle ou d'un adhésif.

La figure 13 représente un exemple de mode de réalisation dans lequel le bord arrière 11 de la lèvre d'entrée d'air 1 comporte des parties en projection radiale 17, sur sa surface interne.

Les parties en projection radiale 17 s'étendent ainsi sensiblement en direction de l'axe longitudinal L de la nacelle. Les parties en projection radiale sont ici représentées en coupe. Elles peuvent correspondre à des parties annulaires (en s'étendant sur toute la surface interne de la lèvre d'entrée d'air 1) au nombre d'une, deux, trois, ou plus, ou à des éléments discrets répartis sur la périphérie de la lèvre d'entrée d'air. Le panneau extérieur 4 est en matériau composite, et son bord avant est formé, par exemple coulé, directement sur le bord arrière 11 de la lèvre d'entrée d'air, à savoir sur la surface interne du bord arrière 11. Le bord avant 41 du panneau extérieur 4 adopte une forme complémentaire de celle du bord arrière 11, notamment au niveau des projections radiales 17. L'emboitement ainsi obtenu entre le bord arrière 11 et le bord avant 41 permet un maintien relatif radial et longitudinal de la lèvre d'entrée d'air 1 et du panneau extérieur 4. Un traitement de surface peut, de manière optionnelle, être réalisé ou un adhésif déposé à l'interface entre la lèvre d'entrée d'air 1 et le panneau extérieur 4, avant formation de l'assemblage de ces éléments (par exemple avant formation du panneau extérieur 4 en matériau composite), afin d'améliorer l'adhérence entre ces éléments.

Bien évidemment, la configuration peut être inversée sans sortir du cadre de l'invention, avec des éléments en projection radiale formés sur le panneau extérieur 4 et une lèvre d'entrée d'air 1 dont le bord arrière en composite est formé sur le bord avant 41 du panneau extérieur 4.

Un assemblage d'élément rigide par clipsage est également envisageable selon la configuration de la figure 13.

Les parties en projection radiale 17 peuvent être usinées ou rapportées sur la pièce concernée, ou formées avec celle-ci notamment lorsqu'elle est en matériau composite.

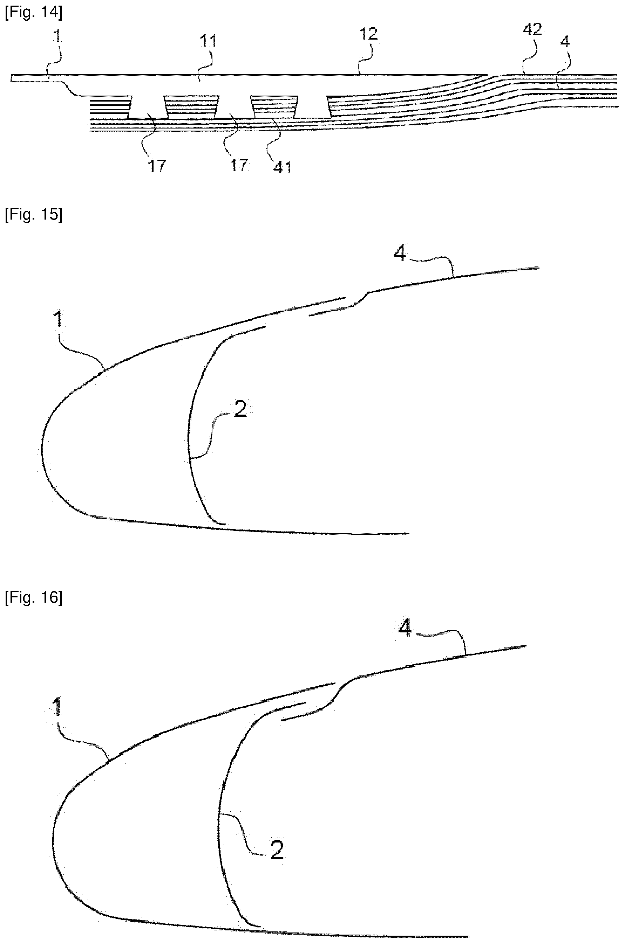

La figure 14 présente une variante de mode de réalisation de la figure 11. Dans cette variante, les parties en projection radiale 17 présentent des bords inclinés, à savoir des bords en contre-dépouille par rapport au panneau extérieur. Ces parties en projection radiale sont usinées dans le bord arrière 11 de la lèvre d'entrée d'air 1. Les parties en projection radiale 17 sont ainsi emprisonnées dans le bord avant 41 lorsque celui-ci est formé directement sur le bord arrière 11. Une liaison rigide, fiable, indémontable ou difficilement démontable, est ainsi obtenue entre la lèvre d'entrée d'air et le panneau extérieur. Un traitement de surface peut, de manière optionnelle, être réalisé ou un adhésif déposé à l'interface entre la lèvre d'entrée d'air 1 et le panneau extérieur 4, avant formation de l'assemblage de ces éléments (par exemple avant formation du panneau extérieur 4 en matériau composite), afin d'améliorer l'adhérence entre ces éléments.

La figure 15 illustre, selon une vue analogue à celle de la figure 3, une partie antérieure de nacelle réalisée conformément à un mode de réalisation de l'invention. En particulier, la zone de liaison entre la lèvre d'entrée d'air 1 et le panneau extérieur 4 peut être réalisée conformément à l'invention, par exemple selon l'un des modes de réalisation décrit en référence à l'une des figures 4 à 14. La figure 16 illustre le fait que la liaison entre le cadre avant 2 et la lèvre d'entrée d'air 1 peut, selon les principes décrits ci-avant, être intégrée avec la liaison entre la lèvre d'entrée d'air 1 et le panneau extérieur 4.

L'invention ainsi développée permet l'obtention d'une liaison entre la lèvre d'entrée d'air et le panneau extérieur d'une nacelle de groupe propulseur d'aéronef, sans utiliser de moyen de liaison rigide et traversant, tel qu'un rivet, qui altèrerait la surface extérieure du profil aérodynamique formé par la nacelle. L'emboîtement du bord arrière de la lèvre d'entrée d'air et du bord, plus ou moins complexe, permet un positionnement relatif fiable entre les pièces ainsi que tout ou partie du maintien entre lesdites pièces. Une colle, une soudure, ou une brasure peut être employée. Dans le cas d'un panneau extérieur et/ou d'une lèvre d'entrée d'air en matériau composite, l'une de ces pièces peut être formée, par exemple coulée, directement en position vis-à-vis de l'autre pièce (qui dans le cas d'une pièce métallique, peut être localement traitée, notamment par chimie ou au laser, pour assurer une bonne adhésion de la pièce en matériau composite). Il en va de même des pièces en matériau hybride métallique/composite.

Les liaisons traversantes rapportées peuvent être éliminées ou leur nombre peut être fortement réduit dans la partie avant de la nacelle. En particulier, toutes les fixations traversantes rapportées peuvent être supprimées dans le plan orbital de fixation de la lèvre d'entrée d'air au panneau extérieur, seul un petit nombre de fixations traversantes demeurant le cas échéant au niveau d'éclissages entre différents secteurs constitutifs de la partie avant de nacelle. Dans certains modes de réalisation, l'invention permet un transfert efficace d'efforts entre une lèvre d'entrée d'air métallique et un panneau extérieur en matériau composite à matrice thermodurcissable, thermoplastique, ou autre, limitant ou évitant le besoin d'un transfert d'effort par adhésion chimique (par exemple par collage). L'écoulement de l'air sur la surface externe de la partie antérieure de la nacelle n'est ainsi pas perturbé par des déformations ou des discontinuités locales, ce qui permet un écoulement d'air parfaitement laminaire.

De manière avantageuse, il est prévu un traitement d'au moins une partie des surfaces métalliques des surfaces en contact entre la lèvre 1 et le panneau extérieur 4. Les dites surfaces sont attaquées de manière chimique ou mécanique (par exemple par bombardement par laser électronique) de manière à les rendre rugueuses afin d'améliorer l'adhérence.

## Revendications

1. Partie antérieure (P1) de nacelle d'un ensemble propulsif d'aéronef, ladite partie antérieure (P1) ayant une extrémité avant permettant l'entrée d'air et une extrémité arrière destinée à être liée au reste de la nacelle (N), ladite partie antérieure comprenant :
- une lèvre d'entrée d'air (1) disposée à ladite extrémité avant,
- un panneau extérieur (4) dont une face extérieure (42) prolonge une partie extérieure (12) de la lèvre d'entrée d'air (1), un bord avant (41) du panneau extérieur (4) étant lié à un bord arrière (11) de la lèvre d'entrée d'air (1)
**caractérisé en ce que** le bord avant (41) du panneau extérieur (4) et le bord arrière (11) de la lèvre d'entrée d'air (1) sont conformés pour se superposer radialement et s'emboîter en assurant une continuité de surface entre la surface extérieure de la partie extérieure (12) de la lèvre d'entrée d'air (1) et la face extérieure (42) du panneau extérieur (4), et **en ce que** le bord avant (41) du panneau extérieur (4) est lié au bord arrière (11) de la lèvre d'entrée d'air (1) sans élément rigide rapporté traversant lesdits bord avant (41) du panneau extérieur (4) et bord arrière (11) de la lèvre d'entrée d'air (1).

2. Partie antérieure de nacelle selon la revendication 1, dans laquelle le bord arrière 11 de la lèvre d'entrée d'air 1 présente une section affinée, diminuant progressivement jusqu'à son extrémité.

3. Partie antérieure de nacelle selon la revendication 1 ou la revendication 2, dans laquelle le bord avant (41) du panneau extérieur (4) est lié au bord arrière (11) de la lèvre d'entrée d'air (1) à l'aide d'une colle.

4. Partie antérieure de nacelle selon la revendication 1 ou la revendication 2, dans laquelle le bord avant (41) du panneau extérieur (4) est lié au bord arrière (11) de la lèvre d'entrée d'air (1) par soudure ou brasure.

5. Partie antérieure de nacelle selon la revendication 1 ou la revendication 2, dans laquelle
- le panneau extérieur (4) est formé en un matériau composite et dans laquelle le bord avant (41) dudit panneau extérieur (4) est formé directement sur le bord arrière (11) de la lèvre d'entrée d'air (1), ou
- dans laquelle la lèvre d'entrée d'air (1) est formée en un matériau composite et dans laquelle le bord arrière (11) de ladite lèvre d'entrée d'air (1) est formé directement sur le bord avant (41) du panneau extérieur (4).

6. Partie antérieure de nacelle selon l'une des revendications précédentes, dans laquelle l'un du bord arrière (11) de la lèvre d'entrée d'air (1) et du bord avant (41) du panneau extérieur (4) comporte des ouvertures radiales (16) comblées par l'autre du bord avant (41) du panneau extérieur (4) et du bord arrière (11) de la lèvre d'entrée d'air (1).

7. Partie antérieure de nacelle selon la revendication 6 dans laquelle, celui du bord avant (41) du panneau extérieur (4) et du bord arrière (11) de la lèvre d'entrée d'air (1) qui comble les ouvertures radiales est formé en matériau composite, et comporte des plis de matériaux composite qui comblent lesdits orifices et qui sont distincts des autres plis constitutifs dudit panneau extérieur (4) ou de ladite lèvre d'entrée d'air (1).

8. Partie antérieure de nacelle selon l'une des revendications précédentes, dans laquelle l'un du bord arrière (11) de la lèvre d'entrée d'air (1) et du bord avant (41) du panneau extérieur (4) comporte des parties en projection radiale (17) emprisonnées dans l'autre du bord avant (41) du panneau extérieur (4) et du bord arrière (11) de la lèvre d'entrée d'air (1).

9. Partie antérieure de nacelle selon l'une des revendications précédentes, dans laquelle le bord avant (41) du panneau extérieur (4) enserre radialement le bord arrière (11) de la lèvre d'entrée d'air (1).

10. Partie antérieure de nacelle selon l'une des revendications 1 à 6, dans laquelle le bord arrière (11) de la lèvre d'entrée d'air (1) enserre radialement le bord avant (41) du panneau extérieur (4).

11. Partie antérieure de nacelle selon l'une des revendications précédentes, comportant un revêtement de surface formé à cheval entre la face externe du panneau extérieur (4) et la partie extérieure (12) de la lèvre d'entrée d'air (1).

12. Partie antérieure de nacelle selon l'une des revendications précédentes, dans laquelle il est prévu un traitement d'au moins une partie des surfaces métalliques des surfaces en contact entre la lèvre (1) et le panneau extérieur (4) de manière à les rendre rugueuses.

13. Nacelle (N) de groupe propulsif d'aéronef comportant une partie antérieure conforme à l'une des revendications précédentes.

## Patentansprüche

1. Vorderteil (P1) einer Gondel einer Antriebseinheit eines Luftfahrzeugs, wobei der Vorderteil (P1) ein vorderes Ende, das den Eintritt von Luft ermöglicht, und ein hinteres Ende, das dazu bestimmt ist, mit dem Rest der Gondel (N) verbunden zu werden, aufweist, wobei der Vorderteil umfasst:
- eine Lufteinlasslippe (1), die am vorderen Ende angeordnet ist,
- ein äußeres Paneel (4), von dem eine Außenseite (42) einen äußeren Teil (12) der Lufteinlasslippe (1) verlängert, wobei ein vorderer Rand (41) des äußeren Paneels (4) mit einem hinteren Rand (11) der Lufteinlasslippe (1) verbunden ist,
**dadurch gekennzeichnet, dass** der vordere Rand (41) des äußeren Paneels (4) und der hintere Rand (11) der Lufteinlasslippe (1) dafür ausgebildet sind, sich radial zu überlappen und ineinander einzurasten und dabei einen stetigen Oberflächenverlauf zwischen der Außenfläche des äußeren Teils (12) der Lufteinlasslippe (1) und der Außenseite (42) des äußeren Paneels (4) sicherzustellen, und dadurch, dass der vordere Rand (41) des äußeren Paneels (4) mit dem hinteren Rand (11) der Lufteinlasslippe (1) ohne ein starres Einsatzelement, das den vorderen Rand (41) des äußeren Paneels (4) und den hinteren Rand (11) der Lufteinlasslippe (1) durchquert, verbunden ist.

2. Vorderteil einer Gondel nach Anspruch 1, wobei der hintere Rand (11) der Lufteinlasslippe (1) einen sich verjüngenden Querschnitt aufweist, der sich bis zu seinem Ende allmählich verkleinert.

3. Vorderteil einer Gondel nach Anspruch 1 oder Anspruch 2, wobei der vordere Rand (41) des äußeren Paneels (4) mit dem hinteren Rand (11) der Lufteinlasslippe (1) mithilfe eines Klebstoffs verbunden ist.

4. Vorderteil einer Gondel nach Anspruch 1 oder Anspruch 2, wobei der vordere Rand (41) des äußeren Paneels (4) mit dem hinteren Rand (11) der Lufteinlasslippe (1) durch Schweißen oder Hartlöten verbunden ist.

5. Vorderteil einer Gondel nach Anspruch 1 oder Anspruch 2, wobei
- das äußere Paneel (4) aus einem Verbundwerkstoff geformt ist und wobei der vordere Rand (41) des äußeren Paneels (4) direkt an den hinteren Rand (11) der Lufteinlasslippe (1) angeformt ist, oder
- wobei die Lufteinlasslippe (1) aus einem Verbundwerkstoff geformt ist und wobei der hintere Rand (11) der Lufteinlasslippe (1) direkt an den vorderen Rand (41) des äußeren Paneels (4) angeformt ist.

6. Vorderteil einer Gondel nach einem der vorhergehenden Ansprüche, wobei einer von dem hinteren Rand (11) der Lufteinlasslippe (1) und dem vorderen Rand (41) des äußeren Paneels (4) radiale Öffnungen (16) aufweist, die durch den anderen von dem vorderen Rand (41) des äußeren Paneels (4) und dem hinteren Rand (11) der Lufteinlasslippe (1) verschlossen werden.

7. Vorderteil einer Gondel nach Anspruch 6, wobei derjenige von dem vorderen Rand (41) des äußeren Paneels (4) und dem hinteren Rand (11) der Lufteinlasslippe (1), welcher die radialen Öffnungen verschließt, aus einem Verbundwerkstoff geformt ist und Schichten von Verbundwerkstoffen aufweist, welche die Durchlässe verschließen und welche von den anderen Schichten verschieden sind, die Bestandteile des äußeren Paneels (4) oder der Lufteinlasslippe (1) sind.

8. Vorderteil einer Gondel nach einem der vorhergehenden Ansprüche, wobei einer von dem hinteren Rand (11) der Lufteinlasslippe (1) und dem vorderen Rand (41) des äußeren Paneels (4) radial vorstehende Teile (17) aufweist, die in dem anderen von dem vorderen Rand (41) des äußeren Paneels (4) und dem hinteren Rand (11) der Lufteinlasslippe (1) eingeschlossen sind.

9. Vorderteil einer Gondel nach einem der vorhergehenden Ansprüche, wobei der vordere Rand (41) des äußeren Paneels (4) den hinteren Rand (11) der Lufteinlasslippe (1) radial umgreift.

10. Vorderteil einer Gondel nach einem der Ansprüche 1 bis 6, wobei der hintere Rand (11) der Lufteinlasslippe (1) den vorderen Rand (41) des äußeren Paneels (4) radial umgreift.

11. Vorderteil einer Gondel nach einem der vorhergehenden Ansprüche, welcher eine Oberflächenbeschichtung aufweist, welche die Verbindungsstelle zwischen der Außenseite des äußeren Paneels (4) und dem äußeren Teil (12) der Lufteinlasslippe (1) übergreifend ausgebildet ist.

12. Vorderteil einer Gondel nach einem der vorhergehenden Ansprüche, wobei eine Behandlung wenigstens eines Teils der metallischen Oberflächen der in Kontakt befindlichen Flächen zwischen der Lippe (1) und dem äußeren Paneel (4) vorgesehen ist, um sie aufzurauen.

13. Gondel (N) einer Antriebsgruppe eines Luftfahrzeugs, welche einen Vorderteil gemäß einem der vorhergehenden Ansprüche aufweist.

## Claims

1. Anterior part (P1) of a nacelle of an aircraft propulsion assembly, said anterior part (P1) having a front end allowing air to enter and a rear end intended to be connected to the rest of the nacelle (N), said anterior part comprising:
- an air intake lip (1) disposed at said front end,
- an outer panel (4), an outer face (42) of which extends an outer part (12) of the air intake lip (1), a front edge (41) of the outer panel (4) being connected to a rear edge (11) of the air intake lip (1),
**characterized in that** the front edge (41) of the outer panel (4) and the rear edge (11) of the air intake lip (1) are shaped so as to overlap radially and nest so as to ensure a continuous surface between the outer surface of the outer part (12) of the air intake lip (1) and the outer face (42) of the outer panel (4), and **in that** the front edge (41) of the outer panel (4) is connected to the rear edge (11) of the air intake lip (1) with no added rigid element fully penetrating said front edge (41) of the outer panel (4) and rear edge (11) of the air intake lip (1).

2. Nacelle anterior part according to Claim 1, in which the rear edge (11) of the air intake lip (1) has a thinned section that reduces progressively to its end.

3. Nacelle anterior part according to Claim 1 or Claim 2, in which the front edge (41) of the outer panel (4) is connected to the rear edge (11) of the air intake lip (1) using a glue.

4. Nacelle anterior part according to Claim 1 or Claim 2, in which the front edge (41) of the outer panel (4) is connected to the rear edge (11) of the air intake lip (1) by welding or soldering.

5. Nacelle anterior part according to Claim 1 or Claim 2, in which
- the outer panel (4) is formed of a composite material and in which the front edge (41) of said outer panel (4) is formed directly on the rear edge (11) of the air intake lip (1), or
- in which the air intake lip (1) is formed of a composite material and in which the rear edge (11) of said air intake lip (1) is formed directly on the front edge (41) of the outer panel (4).

6. Nacelle anterior part according to one of the preceding claims, in which either the rear edge (11) of the air intake lip (1) or the front edge (41) of the outer panel (4) comprises radial openings (16) that are filled with the other of the front edge (41) of the outer panel (4) and the rear edge (11) of the air intake lip (1).

7. Nacelle anterior part according to Claim 6, in which that one of the front edge (41) of the outer panel (4) and the rear edge (11) of the air intake lip (1) that fills the radial openings is formed of a composite material, and comprises plies of composite materials that fill said orifices and are distinct from the other plies constituting said outer panel (4) or said air intake lip (1).

8. Nacelle anterior part according to one of the preceding claims, in which either the rear edge (11) of the air intake lip (1) or the front edge (41) of the outer panel (4) comprises radially projecting parts (17) that are captively held in the other of the front edge (41) of the outer panel (4) and the rear edge (11) of the air intake lip (1).

9. Nacelle anterior part according to one of the preceding claims, in which the front edge (41) of the outer panel (4) radially tightly surrounds the rear edge (11) of the air intake lip (1).

10. Nacelle anterior part according to one of Claims 1 to 6, in which the rear edge (11) of the air intake lip (1) radially tightly surrounds the front edge (41) of the outer panel (4).

11. Nacelle anterior part according to one of the preceding claims, comprising a surface coating formed straddling the outer face of the outer panel (4) and the outer part (12) of the air intake lip (1).

12. Nacelle anterior part according to one of the preceding claims, in which at least part of the metal surfaces, of the contacting surfaces between the lip (1) and the outer panel (4), is treated so as to roughen them.

13. Nacelle (N) of an aircraft propulsion unit, comprising an anterior part according to one of the preceding claims.
